# FASCICULE DE BREVET EUROPEEN

(11) **EP 1 231 107 B1**
(45) Date de publication et mention de la délivrance du brevet: **16.01.2008**
(21) Numéro de dépôt: 02290260.5
(22) Date de dépôt: 04.02.2002
(51) Int. Cl.: B60Q 1/00, B60Q 1/04

(54) **Bloc optique de véhicule comportant des moyens de fixation de projecteurs améliorés**
Kfz-Beleuchtungseinheit mit verbesserten Mitteln zur Befestigung der Scheinwerfer
Headlamp unit for vehicle with improved headlamp fastening means

(30) Priorité: 08.02.2001 FR 0101728
(43) Date de publication de la demande: 14.08.2002
(73) Titulaire: Faurecia Bloc Avant, 92000 Nanterre (FR)
(72) Inventeur: Berne, Sébastien, 25200 Montbeliard (FR); Riviere, Caroline, 25700 Valentigney (FR)
(74) Mandataire: Jacobson, Claude

(56) Documents cités:
- EP-A- 0 649 773
- WO-A-00/07844
- DE-A- 19 632 688
- US-A- 5 428 511
- US-A- 5 702 174

## Description

L'invention se situe dans le domaine des équipements pour véhicules automobiles.

Elle concerne un bloc optique pour véhicule automobile comprenant un boîtier qui présente une ouverture principale destinée à être tournée vers l'extérieur du véhicule, et au moins un élément de projecteur fixé à l'intérieur dudit boîtier.

On connaît dans l'état de la technique des blocs optiques de ce type, notamment montés sur la face avant du véhicule, dont les lampes sont accessibles depuis le compartiment moteur. Ainsi, pour réaliser le remplacement d'une lampe du bloc optique, l'utilisateur doit-il opérer en surplomb du bloc optique en glissant les mains dans un espace du compartiment moteur extrêmement réduit. L'utilisateur dispose donc de peu de visibilité et de place pour manipuler la lampe et réaliser l'opération de rechange.

On a déjà proposé de remédier à cet inconvénient en proposant un bloc optique pour véhicule automobile dont le démontage des constituants du projecteur, en particulier des lampes, culots et/ou déflecteurs, soit facilité par une accessibilité accrue.

On connaît en effet un bloc optique qui comprend un organe de fixation intermédiaire sur lequel est fixé ledit élément de projecteur, ledit organe de fixation intermédiaire étant lui-même fixé de façon détachable à l'intérieur du boîtier par des moyens de fixation libérables, de façon à pouvoir être déplacé vers l'ouverture principale du boîtier, lorsque lesdits moyens de fixation sont libérés.

On connaît aussi selon WO 00/07844 un bloc optique amélioré. De tels blocs optiques ne donnent pas entière satisfaction, du fait que l'on ne peut pas opérer une maintenance par l'avant des éléments d'éclairage sans perdre les réglages des optiques.

Un but principal de l'invention est de remédier à cet inconvénient.

L'invention consiste en un bloc optique selon la revendication 1.

Suivant d'autres caractéristiques de l'invention :
- l'organe de fixation intermédiaire est une platine de fixation dans laquelle est pratiquée au moins un évidement adapté pour recevoir de façon complémentaire ledit au moins un élément de projecteur ;
- l'organe de fixation intermédiaire présente au moins une poignée de préhension en saillie vers l'ouverture principale ;
- lesdits moyens de fixation libérables comportent des moyens de verrouillage libérables assurant la liaison de fixation détachable de l'organe de fixation intermédiaire sur le support réglable ;
- les moyens de verrouillage libérables comportent au moins un doigt de verrouillage monté pivotant sur le support et comprenant un ergot de verrouillage adapté pour coopérer avec un épaulement formé sur l'organe de fixation intermédiaire, et une forme d'entraînement en rotation ;
- les moyens de verrouillage libérables comportent au moins une paire d'éléments d'encliquetage complémentaires formés respectivement sur l'organe de fixation intermédiaire et sur le support, adaptés pour maintenir l'organe de fixation intermédiaire et le support dans une position mutuelle d'attente pré-verrouillée ;
- le support réglable présente une glissière de guidage de l'organe de fixation intermédiaire entre une position de verrouillage et une position de pré-montage sur ledit support ;
- le support réglable présente un corps adapté pour coopérer par complémentarité de forme avec l'organe de fixation intermédiaire lorsque ceux-ci sont dans leur position de verrouillage et la glissière de guidage s'étend sensiblement en direction de l'ouverture principale depuis ledit corps;
- la glissière présente un bord d'extrémité libre au voisinage duquel est formé un organe de maintien de l'organe de fixation intermédiaire dans sa position de pré-montage, ledit organe de maintien étant adapté pour coopérer avec un organe complémentaire formé sur l'organe de fixation intermédiaire ;
- l'organe de maintien et l'organe complémentaire définissent une liaison pivot permettant un pivotement de l'organe de fixation intermédiaire par rapport au support, lorsque l'organe de fixation intermédiaire atteint une position voisine du bord d'extrémité libre de la glissière ;
- le bloc optique comprend une glace fixée de façon détachable sur le boîtier, de façon à obturer au moins partiellement l'ouverture principale ; et
- le boîtier est réalisé d'une pièce avec un élément de carrosserie ou de structure du véhicule.

L'invention concerne également une face avant de véhicule automobile comportant un bloc optique du type décrit précédemment.

L'invention vise enfin un véhicule automobile équipé d'un tel bloc optique.

L'invention sera mieux comprise à la lecture de la description qui va suivre, donnée uniquement à titre d'exemple, et faite en se référant aux dessins annexés sur lesquels :
- la Figure 1 est une vue de face d'un bloc optique suivant l'invention et d'une partie de face avant de véhicule, de laquelle est solidaire le bloc optique ;
- la Figure 2 est une vue de face de la platine la de fixation recevant les éléments de projecteur du bloc optique représenté à la Figure 1 ;
- la Figure 3 est vue arrière de la platine de fixation de la Figure 2 ;
- La Figure 4 est une vue de face du support réglable du bloc optique de la Figure 1 ;
- la Figure 5 est une vue à plus grande échelle d'un doigt de verrouillage, monté sur le support réglable représenté sur la Figure 4 ;
- la Figure 6 est une vue de détail à plus grande échelle montrant le doigt de verrouillage de la Figure 5 dans sa position verrouillant la platine de fixation sur le support réglable;
- la Figure 7 est une vue de face du bloc optique de la Figure 1, en position verrouillée de la platine de fixation sur le support réglable;
- la Figure 8 est une vue analogue, dans la position pré-verrouillée de la platine de fixation du support réglable ; et
- la Figure 9 est une vue de dessus du bloc optique représenté sur les Figures précédentes, la platine de fixation étant dans sa position pré-montée sur le support réglable.

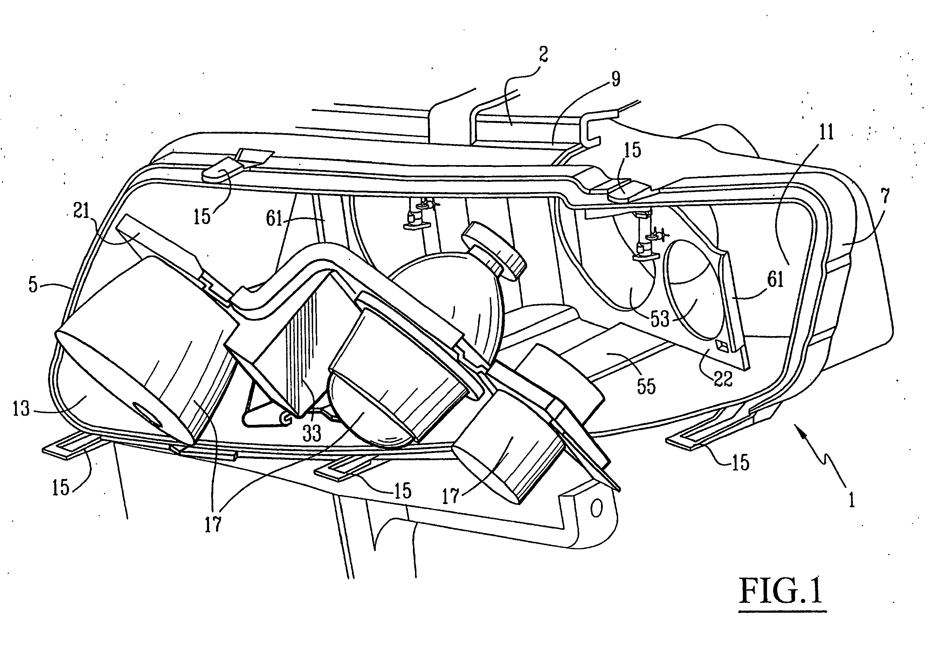

A la Figure 1, on a représenté un bloc optique 1, monté et fixé sur une partie de face avant 2 d'un véhicule automobile.

Afin de simplifier la description qui va suivre, le bloc optique sera orienté par rapport à sa disposition de fonctionnement sur le véhicule, et les termes « avant », « arrière », « inférieur », « supérieur », etc... s'entendront suivant l'orientation normale du véhicule.

De façon classique, un tel bloc optique avant 1 comprend un boîtier 5, intégré par complémentarité de forme dans la face avant 2 du véhicule, et comportant sur sa périphérie des moyens de fixation sur ladite face avant 2.

Dans le mode de réalisation qui a été représenté, le boîtier 5 est rapporté sur la face avant 2, mais l'invention se conçoit également dans le cas d'un boîtier réalisé d'une pièce avec la face avant 2 ou avec d'autres éléments de carrosserie ou de structure du véhicule. L'invention se conçoit par ailleurs pour un bloc optique disposé à un autre emplacement du véhicule, par exemple à l'arrière.

Le boîtier 5 présente une jupe périphérique 7 qui coopère avec des bords 9 complémentaires de la face avant 2, un fond 11 situé du côté du compartiment moteur et intégré dans la face avant 2, et une ouverture frontale 13 constituant l'ouverture principale du boîtier 5 tournée vers l'extérieur du véhicule, opposée au fond de boîtier 11.

Le boîtier 5 présente des pattes élastiques 15 en saillie de la jupe périphérique 7 vers l'avant, ces pattes élastiques 15 étant prévues pour coopérer avec des ergots complémentaires d'une glace (non représentée) du bloc optique. La glace, qui n'a pas été représentée pour des raisons de clarté, est ainsi fixée sur le boîtier 5 de façon détachable, de sorte qu'elle obture l'ouverture principale 13, des moyens d'étanchéité étant interposés entre ladite glace et la jupe périphérique 7.

La glace peut ainsi être facilement retirée du boîtier 5, donnant ainsi un accès facilité au volume intérieur du boîtier 5 depuis l'extérieur du véhicule, sans transiter par le compartiment moteur.

Le bloc optique 1 comprend d'autre part des éléments de projecteur 17, ici représentés au nombre de trois, qui sont constitués par exemple d'une lampe, d'une douille de lampe et/ou d'un réflecteur, et sont fixés à l'intérieur du boîtier 5. Chaque élément de projecteur 17 est soit une lampe, soit un élément associé à une lampe, chacune de ces lampes étant alimentée électriquement depuis le fond 11 du boîtier 5.

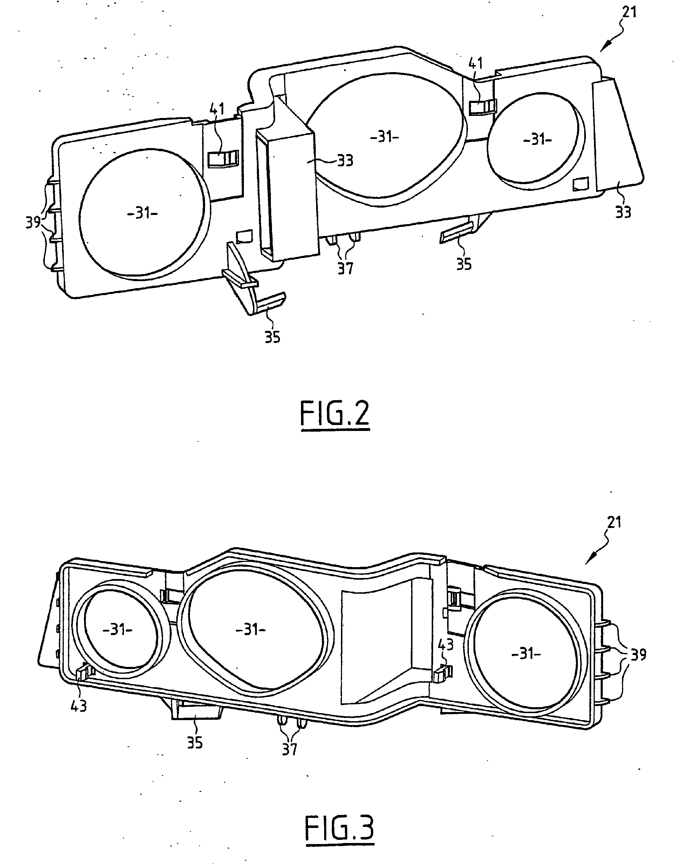

La fixation des éléments de projecteur 17 par rapport au boîtier 5 est réalisée au moyen de deux organes intermédiaires 21, 22, le premier 21 étant un organe de fixation intermédiaire, sous la forme d'une platine de fixation, et le deuxième 22 étant un organe de réglage en position sous la forme d'un support réglable. Ces organes intermédiaires 21, 22 du bloc optique 1 vont être décrits plus en détail en référence aux Figures 2 à 4.

Les éléments de projecteur 17 sont fixés sur la platine de fixation 21, de façon à pouvoir être démontés de ladite platine de fixation 21, les moyens de fixation utilisés étant de type connu (par exemple par vissage, assemblage à baïonnette, etc..).

Le support réglable 22 est adapté pour recevoir la platine de fixation 21 suivant une liaison de fixation détachable qui sera décrite plus en détail par la suite, et qui permet à un utilisateur de déplacer le platine de fixation 21 vers l'ouverture principale 13 du boîtier 5, lorsque les moyens de fixation de la platine 21 sur le support réglable 22 sont libérés. Le support réglable 22, disposé dans le boîtier 5 vers le fond 11 de celui-ci, est relié au boîtier 5 par des liaisons mécaniques autorisant un pivotement du support réglable 22 dans le boîtier 5. Ainsi, le support 22 peut être orienté solidairement avec les éléments de projecteur 17, lorsque ceux-ci sont fixés sur la platine de fixation 21 et que la platine de fixation 21 est fixée sur le support réglable 22.

Les liaisons mécaniques du support réglable 22 sur le boîtier 5 n'ont pas été représentées, mais comprennent notamment des rotules permettant de faire pivoter le support réglable 22 suivant différents axes.

En référence à la Figure 2, on va maintenant décrire plus en détail la platine de fixation 21.

La platine de fixation 21 présente trois évidements 31, ici formés de trous traversant, chacun étant complémentaire d'un élément de projecteur 17 respectif. Les éléments de fixation des éléments de projecteur 17 dans les évidements 31 sont des moyens de fixation détachables, tels que des moyens à vis ou à baïonnette, de sorte que les éléments de projecteur 17 sont remplaçables facilement. La platine 21 comporte d'autre part des poignées de préhension 33 en saillie sur la face de la platine 21 tournée vers l'ouverture principale 13 du boîtier 5, ces poignées 33 étant destinées à faciliter le retrait de la platine 21 et sa mise en place. Des barrettes 35, sensiblement alignées entre elles, sont formées en saillie de la platine 21 vers le bas. Les barrettes 35 définissent des organes de guidage et de maintien de la platine 21 sur le support 22. D'autres organes de guidage 37, décalés verticalement par rapport aux barrettes 35, sont formés sur un bord périphérique inférieur de la platine 21. Des dents de centrage 39, formées sur un bord périphérique latéral, assurent un positionnement précis de la platine 21 par rapport à son support 22. Dans la platine 21 sont également formées des lumières 41 destinées à coopérer avec un ergot de verrouillage complémentaire monté sur le support 22. Ces lumières 41 ont été représentées au nombre de deux dans l'exemple de réalisation illustré par les dessins.

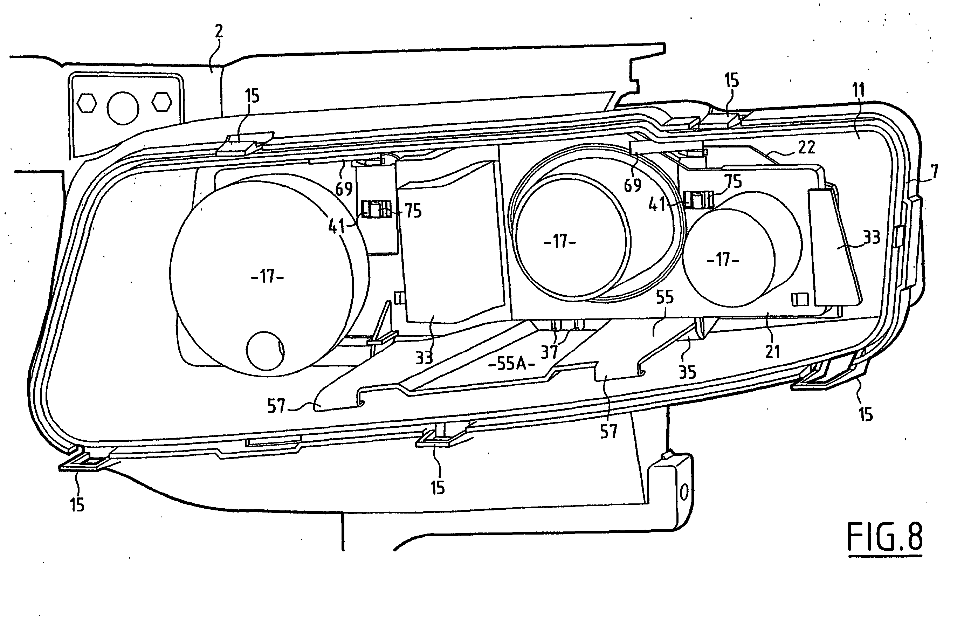

Sur la Figure 3, on a représenté la même platine de fixation 21 en vue arrière, de façon à faire apparaître deux pattes élastiques 43 formées en saillie de la platine 21, tournées vers le support 22, et prévues pour définir, avec des organes complémentaires dudit support 22, une position d'attente pré-verrouillée qui sera illustrée sur la Figure 8.

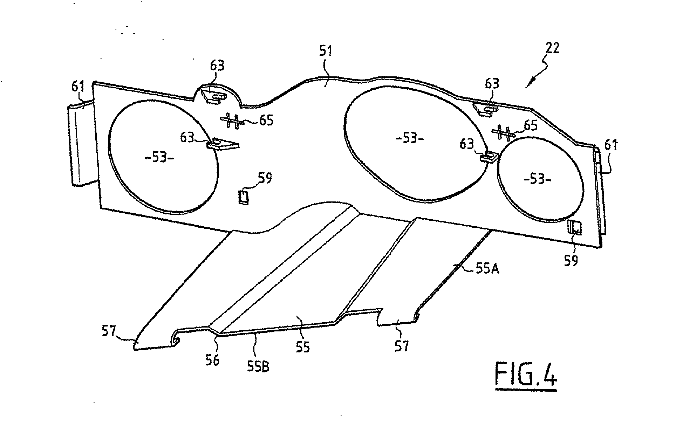

On va maintenant décrire avec plus de détails le support réglable 22 en référence à la Figure 4.

Ce support 22 présente un corps 51 sous la forme d'une platine de forme sensiblement complémentaire de la platine de fixation 21, de sorte que la platine de fixation 21 puisse être plaquée sur le corps 51, lorsque la platine de fixation 21 et le support 22 sont dans leur position verrouillée, en assurant un maintien stable de l'une sur l'autre. Le corps 51 comporte trois trous traversant 53 de formes correspondant aux évidements 31 de la platine de fixation 21. Ces trous 53 sont disposés sur le corps 51 de façon à être en coïncidence avec les évidements 31 de la platine de fixation 21 lors de l'assemblage de celle-ci sur le support 22. Ainsi, les éléments de projecteur 17 fixés sur la platine de fixation 21 peuvent déboucher à travers les trous 53 vers le fond 11 du boîtier 5 pour être alimentés électriquement depuis le bloc moteur à travers le fond 11.

Le support 22 présente une glissière 55 formée comme une nappe en saillie vers l'ouverture principale 13, depuis un bord inférieur du corps 51. La glissière 55 est configurée de façon que sa face supérieure 55A puisse recevoir à coulissement la platine de fixation 21. Les barrettes 35 de guidage et de maintien de la platine de fixation 21 s'engagent sur la surface inférieure 55B de la glissière 55, de façon à limiter le déplacement relatif de la platine de fixation 21 par rapport au support 22, dans les directions transversales par rapport à la direction principale de coulissement. La surface supérieure 55A de la glissière 55 est également destinée à coopérer avec les organes de guidage 37 prévus sur le bord de la platine de fixation. La glissière 55 présente un bord d'extrémité libre 56 sur lequel sont formés deux organes de maintien 57, sous la forme de crochets obtenus par un retour de matière, chacun desdits crochets 57 étant adapté pour coopérer avec une barrette respective 35 de la platine de fixation 21, de façon à constituer avec elle un organe d'arrêt en translation dans le sens du coulissement de la platine 21 par rapport au support 22, ainsi qu'une charnière matérialisant un axe de pivotement de la platine 21 par rapport au support 22.

Dans le corps 51 sont formées deux lumières 59 correspondant respectivement aux pattes élastiques 43. Chaque patte élastique 43 constitue avec la lumière 59 respective une paire d'éléments d'encliquetage complémentaires qui définissent la position d'attente pré-verrouillée de la platine 21 sur le support 22.

Une surface d'appui 61 est formée en saillie de chaque bord latéral du corps 51, en convergeant vers celui-ci, dans une position correspondant aux dents de centrage 39 ménagées sur la platine 21. Les pointes des dents de centrage 39 prennent appui sur la surface 61 lorsque la platine de fixation 21 est approchée du corps 51.

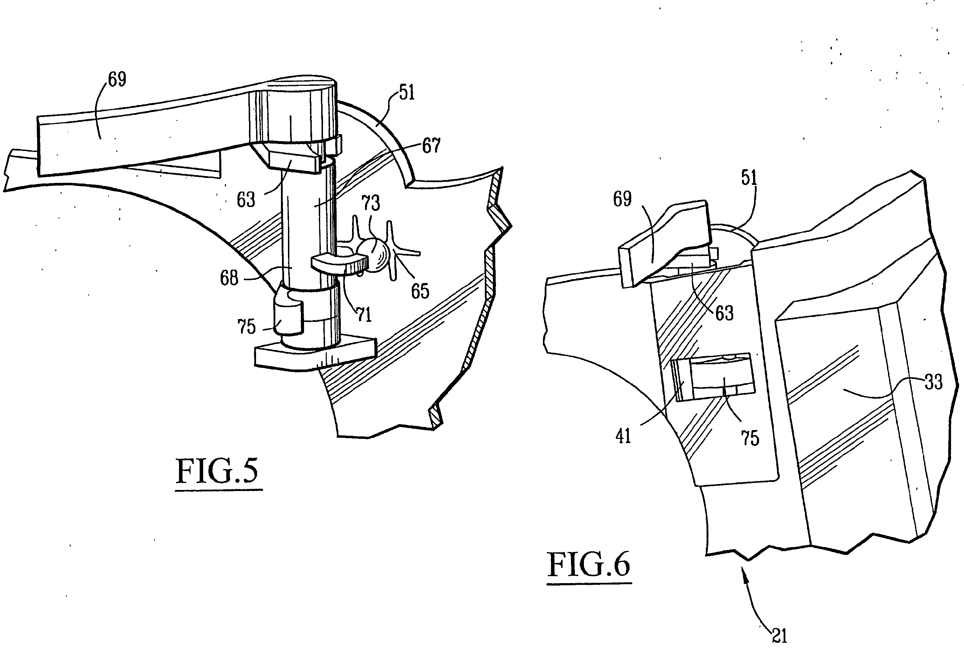

En saillie du corps 51, dans la même direction que celle de la glissière 55, sont formées deux paires d'éléments de charnière 63, les éléments 63 présentant deux à deux des échancrures alignées verticalement, adaptées pour recevoir à pivotement les doigts de verrouillage tels que représentés sur la Figure 5. Au voisinage de l'axe d'alignement des éléments de charnière 63, est ménagée une perforation respective 65 dans le corps 51, cette perforation présentant des bords déformables élastiquement.

Sur la Figure 5, on a représenté en vue de détail agrandie, une paire d'éléments de charnière 63 munis d'un doigt de verrouillage 67. Le doigt de verrouillage 67 est constitué d'une tige 68 montée pivotante dans les échancrures des éléments de charnière 63, d'une forme de manoeuvre 69 solidaire de la tige 68 à une extrémité accessible de celle-ci, la forme de manoeuvre 69 étant configurée pour être facilement saisie et déplacée par l'utilisateur. La tige 68 est d'autre part pourvue, dans une partie intermédiaire située entre les éléments de charnière 63, d'une saillie radiale 71 dont l'extrémité libre, conformée en bille 73, est disposée en vis-à-vis de la perforation 65 du corps 51. Ainsi, lorsque la forme de manoeuvre 69 est déplacée en rotation autour de l'axe matérialisé par le doigt 67 et les éléments de charnière 63, la bille 73 traverse dans un sens ou dans l'autre la perforation 65 en déformant élastiquement ses bords. On réalise par ce biais des crans d'arrêt en rotation du doigt de verrouillage 67. Un ergot 75 est également formé sur la tige 68 du doigt de verrouillage 67, cet ergot 75 étant adapté pour coopérer avec un épaulement correspondant de la lumière respective 41, prévue dans la platine de fixation 21. L'ergot 75 s'engage sur l'épaulement de la lumière 41, ou s'en dégage, en fonction de la position du doigt de verrouillage 67 dans les éléments de charnière 63.

La Figure 6 illustre la position de verrouillage de la platine de fixation 21 sur le corps 51 du support 22, obtenue par l'engagement de l'ergot 75 dans la lumière 41.

Sur les Figures suivantes, on a illustré les trois positions principales de la platine de fixation 21 par rapport au support 22.

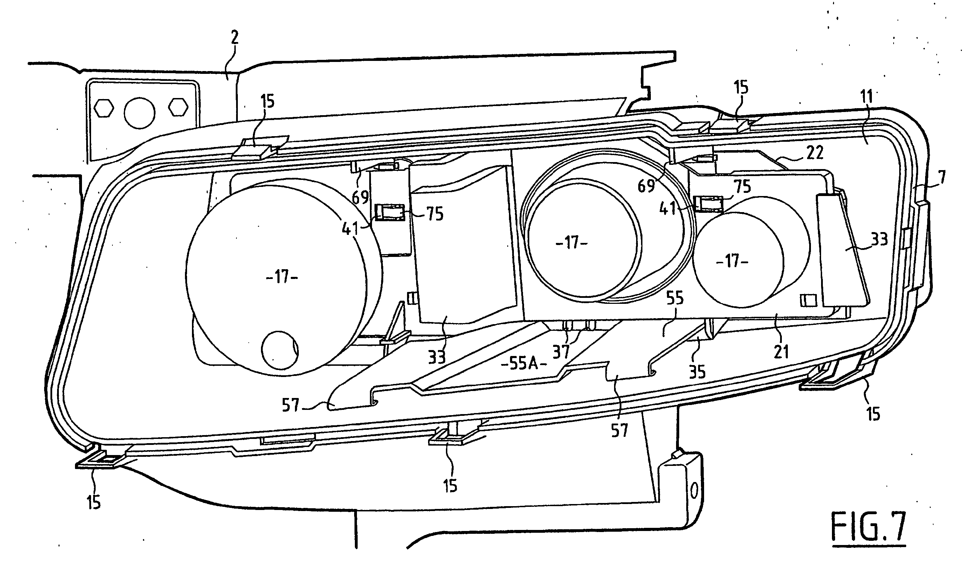

Sur la Figure 7, on a représenté la platine de fixation 21 équipée de trois éléments de projecteur 17, et fixée en position complètement verrouillée sur le support 21. Là encore, la glace équipant normalement le bloc optique et fixée au boîtier par les pattes élastiques 15, n'a pas été représentée.

Un utilisateur qui désire procéder au remplacement d'une lampe ou d'un élément de projecteur 17 devra retirer cette glace, et se retrouve alors dans la situation représentée à la Figure 7. Dans un premier temps, l'utilisateur doit manoeuvrer à rotation les formes de manoeuvre 69 des doigts de verrouillage 67 de façon à dégager les ergots 75 des lumières 41.

La platine de fixation 21 et le support 22 sont alors dans leur position pré-verrouillée représentée à la Figure 8, dans laquelle ils sont maintenus assemblés seulement par coopération des pattes élastiques 43 et des lumières 59 correspondantes. Ces organes d'encliquetage ne sont pas visibles sur cette Figure.

Pour procéder au démontage des éléments du projecteur 17, l'opérateur doit ensuite exercer une traction sur les poignées 23 de la platine de fixation 21 du fond 11 du bloc optique. Le déplacement de la platine de fixation 21 s'effectue par coulissement, le long de la glissière 55, les organes de guidage 37 prenant appui sur la surface supérieure 55A de la glissière 55, et les barrettes 35 prenant appui sur la surface inférieure 55B.

L'opérateur fait coulisser la platine de fixation 21 jusqu'à la position de butée des barrettes 35 dans les crochets 57, position à partir de laquelle la platine de fixation 21 est susceptible de pivoter par rapport au support 22, les barrettes 35 et les crochets respectifs 57 définissant ensemble une liaison charnière.

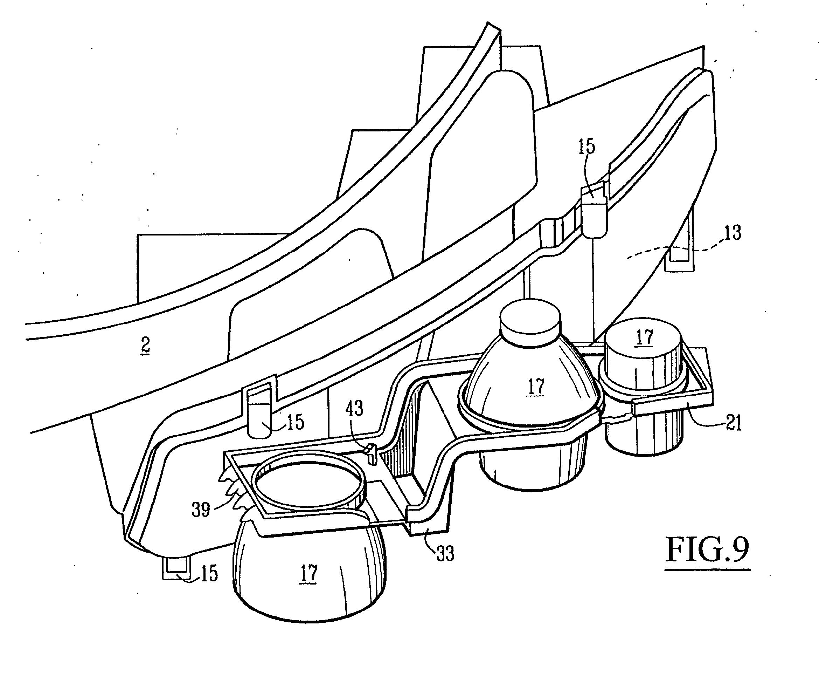

La platine de fixation 21 et les éléments de projecteur 17 se présentent alors dans la position représentée à la Figure 9, position dans laquelle les éléments de projecteur 17 sont aisément accessibles par l'utilisateur depuis l'extérieur du véhicule, avec une visibilité complète.

Comme cela apparaît au vu de la description qui vient d'être faite, l'invention permet de réaliser un bloc optique dont la maintenance, notamment le démontage et le remplacement d'éléments de projecteur, est grandement facilitée. L'utilisation d'un support réglable en position, distinct de la platine de fixation des éléments de projecteur, permet également d'assurer les opérations de maintenance sans altérer les réglages réalisés précédemment.

## Revendications

1. Bloc optique pour véhicule automobile comprenant un boîtier (5) qui présente une ouverture principale (13) destinée à être tournée vers l'extérieur du véhicule, au moins un élément de projecteur (17) fixé à l'intérieur dudit boîtier (5), et un organe de fixation intermédiaire (21) sur lequel est fixé ledit élément de projecteur (17), ledit organe de fixation intermédiaire (21) étant lui-même fixé de façon détachable à l'intérieur du boîtier (5) par des moyens de fixation libérables (22), 67), de façon à pouvoir être déplacé vers l'ouverture principale (13) du boîtier (5), lorsque lesdits moyens de fixation (22, 67) sont libérés, lesdits moyens de fixation libérables (22, 67) comportant des moyens (22) de réglage en position de l'organe de fixation intermédiaire (21) par rapport au boîtier (5), et lesdits moyens de réglage (22) comportent un support (22) réglable en position par rapport au boîtier (5), adapté pour recevoir l'organe de fixation intermédiaire (21) suivant une liaison de fixation détachable, **caractérisé en ce que** le support (22) est réglable en position par rapport au boîtier (5) par pivotement suivant différents axes de rotation, de telle sorte que la maintenance du bloc optique, notamment le démontage et le remplacement de l'élément de projecteur (17), peut être assurée sans altérer les réglages en position réalisés précédemment.

2. Bloc optique suivant la revendication 1, **caractérisé en ce que** l'organe de fixation intermédiaire (21) est une platine de fixation dans laquelle est pratiquée au moins un évidement (31) adapté pour recevoir de façon complémentaire ledit au moins un élément de projecteur (17).

3. Bloc optique suivant la revendication 1 ou 2, **caractérisé en ce que** l'organe de fixation intermédiaire (21) présente au moins une poignée de préhension (33) en saillie vers l'ouverture principale (13).

4. Bloc optique suivant l'une quelconque des revendications 1 à 3, **caractérisé en ce que** lesdits moyens de fixation libérables (22, 67) comportent des moyens de verrouillage libérables (43, 59, 67) assurant la liaison de fixation détachable de l'organe de fixation intermédiaire (21) sur le support réglable (22).

5. Bloc optique suivant la revendication 4, **caractérisé en ce que** les moyens de verrouillage libérables (22, 67) comportent au moins un doigt de verrouillage (67) monté pivotant sur le support (22) et comprenant un ergot de verrouillage (75) adapté pour coopérer avec un épaulement formé sur l'organe de fixation intermédiaire (21), et une forme (69) d'entraînement en rotation.

6. Bloc optique suivant la revendication 4 ou 5, **caractérisé en ce que** les moyens de verrouillage libérables (22, 67) comportent au moins une paire d'éléments d'encliquetage complémentaires (43, 59) formés respectivement sur l'organe de fixation intermédiaire (21) et sur le support (22), adaptés pour maintenir l'organe de fixation intermédiaire (21) et le support (22) dans une position mutuelle d'attente pré-verrouillée.

7. Bloc optique suivant l'une quelconque des revendications 1 à 6, **caractérisé en ce que** le support réglable (22) présente au moins une glissière (55) de guidage de l'organe de fixation intermédiaire (21) entre une position de verrouillage et une position de pré-montage sur ledit support (22).

8. Bloc optique suivant la revendication 7, **caractérisé en ce que** le support réglable (22) présente un corps (51) adapté pour coopérer par complémentarité de forme avec l'organe de fixation intermédiaire (21) lorsque ceux-ci sont dans leur position de verrouillage, et la glissière de guidage (55) s'étend sensiblement en direction de l'ouverture principale (13) depuis ledit corps (51).

9. Bloc optique suivant la revendication 8, **caractérisé en ce que** la glissière (55) présente un bord (56) d'extrémité libre au voisinage duquel est formé un organe (57) de maintien de l'organe de fixation intermédiaire (21) dans sa position de pré-montage, ledit organe de maintien (57) étant adapté pour coopérer avec un organe complémentaire (35) formé sur l'organe de fixation intermédiaire (21).

10. Bloc optique suivant la revendication 9, **caractérisé en ce que** l'organe de maintien (57) et l'organe complémentaire (35) définissent une liaison pivot permettant un pivotement de l'organe de fixation intermédiaire (21) par rapport au support (22), lorsque l'organe de fixation intermédiaire (21) atteint une position voisine du bord (56) d'extrémité libre de la glissière (55).

11. Bloc optique suivant l'une quelconque des revendications 1 à 10, **caractérisé en ce qu**'il comprend une glace fixée de façon détachable sur le boîtier (5), de façon à obturer au moins partiellement l'ouverture principale (13).

12. Bloc optique suivant l'une quelconque des revendications 1 à 11, **caractérisé en ce que** le boîtier (5) est réalisé d'une pièce avec un élément de carrosserie ou de structure du véhicule.

13. Face avant de véhicule automobile comportant un bloc optique selon l'une quelconque des revendications 1 à 12.

14. Véhicule automobile comportant un bloc optique suivant l'une quelconque des revendications 1 à 12.

## Claims

1. Headlamp unit for a motor vehicle, comprising a housing (5) that has a main opening (13) intended to face towards the outside of the vehicle, at least one projector element (17) fixed inside said housing (5), and an intermediate fixing member (21) to which said projector element (17) is fixed, said intermediate fixing member (21) itself being removably fixed to the inside of the housing (5) by releasable fixing means (22, 67), so as to be capable of being moved towards the main opening (13) of the housing (5), when said fixing means (22, 67) are released, said releasable fixing means (22, 67) comprising means (22) for adjusting the position of the intermediate fixing member (21) relative to the housing (5), and said adjusting means (22) comprise a support (22) which is adjustable in position relative to the housing (5), adapted to receive the intermediate fixing member (21) following a detachable fixing connection, **characterised in that** the support (22) is adjustable in position relative to the housing (5) by pivoting along different rotation axes, so that the maintenance of the headlamp unit, particularly the demounting and replacement of the projector element (17) can be carried out without altering the positional adjustments made previously.

2. Headlamp unit according to claim 1, **characterised in that** the intermediate fixing member (21) is a fixing plate in which is formed at least one recess (31) adapted to receive, in complementary manner, said at least one projector element (17).

3. Headlamp unit according to claim 1 or 2, **characterised in that** the intermediate fixing member (21) has a least one gripping handle (33) projecting towards the main opening (13).

4. Headlamp unit according to any one of claims 1 to 3, **characterised in that** said releasable fixing means (22, 67) comprise releasable locking means (43, 59, 67) for removably attaching the intermediate fixing member (21) to the adjustable support (22).

5. Headlamp unit according to claim 4, **characterised in that** the releasable locking means (22, 67) comprise at least one locking pawl (67) pivotably mounted on the support (22) and comprising a locking lug (75) adapted to cooperate with a shoulder formed on the intermediate fixing member (21), and a form for rotational driving (69).

6. Headlamp unit according to claim 4 or 5, **characterised in that** the releasable locking means (22, 67) comprise at least one pair of complementary latching elements (43, 59) formed respectively on the intermediate fixing member (21) and on the support (22), adapted to hold the intermediate fixing member (21) and the support (22) in a mutual pre-locked waiting position.

7. Headlamp unit according to any one of claims 1 to 6, **characterised in that** the adjustable support (22) has at least one slide (55) for guiding the intermediate fixing member (21) between a locking position and a pre-assembly position on said support (22).

8. Headlamp unit according to claim 7, **characterised in that** the adjustable support (22) has a body (51) adapted to cooperate, by complementarity of shape, with the intermediate fixing member (21) when they are in their locking position, and the guiding slide (55) extends substantially in the direction of the main opening (13) from said body (51).

9. Headlamp unit according to claim 8, **characterised in that** the slide (55) has a free end edge (56) in the vicinity of which is formed a holding member (57) for holding the intermediate fixing member (21) in its pre-assembly position, said holding member (57) being adapted to cooperate with a complementary member (35) formed on the intermediate fixing member (21).

10. Headlamp unit according to claim 9, **characterised in that** the holding member (57) and the complementary member (35) define a pivot joint which allows pivoting of the intermediate fixing member (21) relative to the support (22), when the intermediate fixing member (21) reaches a position close to the free end edge (56) of the slide (55).

11. Headlamp unit according to any one of claims 1 to 10, **characterised in that** it comprises a lens removably fixed to the housing (5) so as to at least partially close off the main opening (13).

12. Headlamp unit according to any one of claims 1 to 11, **characterised in that** the housing (5) is made in one piece with a bodywork or structural element of the vehicle.

13. Front end of a motor vehicle comprising a headlamp unit according to any one of claims 1 to 12.

14. Motor vehicle comprising a headlamp unit according to any one of claims 1 to 12.

## Patentansprüche

1. Beleuchtungseinheit für Kraftfahrzeuge mit einem Gehäuse (5), das eine Hauptöffnung (13) aufweist, welche dafür bestimmt ist zum Außenbereich des Fahrzeugs hin gerichtet zu sein, zumindest ein Scheinwerferelement (17), das am Inneren des Gehäuses (5) befestigt ist, und ein Zwischenbefestigungsorgan (21), an welchem das Scheinwerferelement (17) befestigt ist, wobei das Zwischenbefestigungsorgan (21) selbst lösbar am Inneren des Gehäuses (5) mit Hilfe lösbarer Befestigungsvorrichtungen (22, 67) derart befestigt ist, dass es zu der Hauptöffnung (13) des Gehäuses (5) hin verschoben werden kann, wenn die Befestigungsvorrichtungen (22, 67) gelöst werden, wobei die lösbaren Befestigungsvorrichtungen (22, 67) Vorrichtungen (22) zur Einstellung der Position des Zwischenbefestigungsorgans (21) bezüglich des Gehäuses (5) aufweisen, und wobei die Einstellvorrichtungen (22) einen in seiner Position bezüglich des Gehäuses (5) einstellbaren Träger (22) aufweisen, der dafür eingerichtet ist, das Zwischenbefestigungsorgan (21) gemäß einer lösbaren Befestigungsverbindung aufzunehmen, **dadurch gekennzeichnet, dass** der Träger (22) in seiner Position bezüglich des Gehäuses (5) durch Schwenken entlang verschiedener Drehachsen derart einstellbar ist, dass die Wartung der Beleuchtungseinheit, insbesondere der Ausbau und der Austausch des Scheinwerferelementes (17) sichergestellt werden kann, ohne die zuvor durchgeführten Positionseinstellungen zu verändern.

2. Beleuchtungseinheit gemäß Anspruch 1, **dadurch gekennzeichnet, dass** das Zwischenbefestigungsorgan (21) eine Befestigungsplatte ist, in welcher zumindest eine Aussparung (31) ausgebildet ist, die dafür eingerichtet ist, das zumindest eine Scheinwerferelement (17) in komplementärer Weise aufzunehmen.

3. Beleuchtungseinheit gemäß Anspruch 1 oder 2, **dadurch gekennzeichnet, dass** das Zwischenbefestigungsorgan (21) zumindest einen Anpackgriff (33) aufweist, der zu der Hauptöffnung (13) hin vorspringt.

4. Beleuchtungseinheit gemäß irgendeinem der Ansprüche 1 bis 3, **dadurch gekennzeichnet, dass** die lösbaren Befestigungsvorrichtungen (22, 67) freigebbare Verriegelungsvorrichtungen (43, 59, 67) aufweisen, welche die lösbare Befestigungsverbindung des Zwischenbefestigungsorgans (21) an dem einstellbaren Träger (22) sicherstellen.

5. Beleuchtungseinheit gemäß Anspruch 4, **dadurch gekennzeichnet, dass** die freigebbaren Verriegelungsvorrichtungen (22, 67) zumindest einen Verriegelungszapfen (67) aufweisen, der schwenkend an dem Träger (22) angebracht ist und einen Verriegelungsnocken (75) aufweist, der dafür eingerichtet ist, mit einem an dem Zwischenbefestigungsorgan (21) ausgebildeten Ansatz und einer Form (69) zum Drehantrieb zusammenzuwirken.

6. Beleuchtungseinheit gemäß Anspruch 4 oder 5, **dadurch gekennzeichnet, dass** die freigebbaren Verriegelungsvorrichtungen (22, 67) zumindest ein Paar komplementärer Einrastelemente (43, 59) aufweisen, die jeweils an dem Zwischenbefestigungsorgan (21) und an dem Träger (22) ausgebildet und dafür eingerichtet sind, das Zwischenbefestigungsorgan (21) und den Träger (22) in einer gegenseitig vorverriegelten Warteposition zu halten.

7. Beleuchtungseinheit gemäß irgendeinem der Ansprüche 1 bis 6, **dadurch gekennzeichnet, dass** der einstellbare Träger (22) zumindest eine Führungsrutsche (55) für das Zwischenbefestigungsorgan (21) zwischen einer Verriegelungsposition und einer Position der Vormontage an dem Träger (22) aufweist.

8. Beleuchtungseinheit gemäß Anspruch 7, **dadurch gekennzeichnet, dass** der einstellbare Träger (22) einen Körper (51) aufweist, der dafür eingerichtet ist, durch seine komplementäre Form mit dem Zwischenbefestigungsorgan (21) zusammenzuwirken, wenn sich diese in ihrer Verriegelungsposition befinden, und sich die Führungsrutsche (55) praktisch in Richtung der Hauptöffnung (13) von dem Körper (51) aus erstreckt.

9. Beleuchtungseinheit gemäß Anspruch 8, **dadurch gekennzeichnet, dass** die Rutsche (55) eine freie Endkante (56) aufweist, in deren Nähe ein Halteorgan (57) für das Zwischenbefestigungsorgan (21) in seiner Vormontage-Position ausgebildet ist, wobei das Halteorgan (57) dafür eingerichtet ist, mit einem komplementären Organ (35) zusammenzuwirken, das an dem Zwischenbefestigungsorgan (21) ausgebildet ist.

10. Beleuchtungseinheit gemäß Anspruch 9, **dadurch gekennzeichnet, dass** das Halteorgan (57) und das komplementäre Organ (35) eine Schwenkverbindung definieren, welche ein Schwenken des Zwischenbefestigungsorgans (21) bezüglich des Trägers (22) ermöglicht, wenn das Zwischenbefestigungsorgan (21) eine Position erreicht, die nahe der freien Endkante (56) der Rutsche (55) liegt.

11. Beleuchtungseinheit gemäß irgendeinem der Ansprüche 1 bis 10, **dadurch gekennzeichnet, dass** sie eine Scheibe aufweist, die lösbar an dem Gehäuse (5) derart befestigt ist, dass sie zumindest teilweise die Hauptöffnung (13) verschließt.

12. Beleuchtungseinheit gemäß irgendeinem der Ansprüche 1 bis 11, **dadurch gekennzeichnet, dass** das Gehäuse (5) aus einem Stück mit einem Karosserie- oder Strukturelement des Fahrzeugs hergestellt ist.

13. Vorderseite von Kraftfahrzeugen mit einer Beleuchtungseinheit gemäß irgendeinem der Ansprüche 1 bis 12.

14. Kraftfahrzeug mit einer Beleuchtungseinheit gemäß irgendeinem der Ansprüche 1 bis 12.
